# EUROPÄISCHE PATENTSCHRIFT

(11) **EP 2 923 952 B1**
(45) Veröffentlichungstag und Bekanntmachung des Hinweises auf die Patenterteilung: **08.05.2019**
(21) Anmeldenummer: 15000782.1
(22) Anmeldetag: 17.03.2015
(51) Int. Cl.: B64G 1/22, B64G 1/44

(54) **SATELLITENSOLARGENERATORFLÜGEL SOWIE SATELLIT**
SATELLITE SOLAR GENERATOR WING AND SATELLITE
PALE DE GÉNÉRATEUR SOLAIRE DE SATELLITE ET SATELLITE

(30) Priorität: 27.03.2014 DE 102014004357
(43) Veröffentlichungstag der Anmeldung: 30.09.2015
(73) Patentinhaber: Airbus Defence and Space GmbH, 82024 Taufkirchen (DE)
(72) Erfinder: Zimmermann, Claus, D-81371 München (DE); Meurer, Rene, D-83052 Bruckmühl (DE); Pfefferkorn, Thomas, D-85604 Zorneding (DE); Birkel, Jens, D-85521 Ottobrunn (DE)
(74) Vertreter: Schicker, Silvia

(56) Entgegenhaltungen:
- EP-A1- 0 754 625
- WO-A1-02/079034
- DE-A1- 10 134 052
- DE-A1- 19 934 511

## Beschreibung

Die Erfindung betrifft einen Satellitensolargeneratorflügel sowie einen Satelliten mit wenigstens einem Satellitensolargeneratorflügel.

An Satelliten werden immer größere Leistungsanforderungen gestellt, die zur Folge haben, dass die Leistung eines Satellitensolargeneratorflügels steigen muss. Abgesehen von neuen, energieeffizienteren Solarzellen, welche auf die einzelnen Solarpanels eines Satellitensolargeneratorflügels aufgebracht werden, können die höheren Leistungen nur dadurch erreicht werden, dass die aktive Fläche, das heißt die mit Solarzellen belegte Fläche, des Satellitensolargeneratorflügels erhöht wird. Hierzu müssen die einzelnen Solarpanels größer werden oder deren Anzahl steigen. Die Solarpanelgröße ist jedoch aufgrund der Satellitengröße limitiert. Unabhängig davon ist zu berücksichtigen, dass die Masse eines Satellitensolargeneratorflügels mit einer Vergrößerung der aktiven Fläche zunimmt. Demnach erhöht sich ebenfalls die Masse, welche von einer Trägerrakete ins All befördert werden muss, was hohe Kosten verursacht.

Es ist daher das Bestreben, neue Satellitensolargeneratorflügel zu entwickeln, die ein verbessertes Leistungsgewicht aufweisen, das heißt eine hohe Leistung bei relativ geringerem Gewicht haben. Hierzu sind aus dem Stand der Technik Satellitensolargeneratorflügel bekannt, die sowohl starre als auch halbstarre Solarpanels aufweisen, welche leichter gegenüber den konventionellen starren Solarpanels sind, die aus einer HonigwabenStruktur aufgebaut sind. Derartige Satellitensolargeneratorflügel werden auch Hybrid-Solargeneratoren genannt und sind beispielsweise aus der EP 0 754 625 A1 bekannt. Die Hybrid-Solargeneratoren werden in konventioneller Weise in ihre Transportstellung gefaltet, in der sie im gefalteten Zustand an einer Satellitenwand anliegen. Über ein Haltersystem wird der Satellitensolargeneratorflügel in dieser Transportstellung fixierend gehalten, wobei das System mit jedem der Solarpanels gekoppelt ist, um die einzelnen Solarpanels in ihrer jeweiligen Lage zu fixieren. Hierdurch sollen die auftretenden Schwingungsamplituden der Solarpanels während der Startphase der Trägerrakete minimiert werden.

Die WO 02/079034 A1 zeigt eine Solargeneratorstruktur für Satelliten, wobei ein Stapel rechteckiger Solarpanels vier starre Panels großer Dicke beinhaltet, zwischen denen jeweils paarweise sechs halbstarre Panels geringer Dicke eingefügt sind. Diese zehn Panels werden von mehreren Stapelsäulen im rechten Winkel zur Panelebene durchquert, wobei jede Stapelsäule aus mehreren übereinandergeschichteten und zusammengerückten Hohlbuchsen besteht. Jede Hohlbuchse ist kraftschlüssig mit einem zugehörigen Panel verbunden. Im Bereich der Hohlbuchsen werden die Panels zusammengedrückt. Zwischen den aufeinanderfolgenden, gestapelten Panels sind Verstrebungselemente angeordnet, die eine mechanische Kopplung zwischen zwei aufeinanderfolgenden Panels erhöhen.

Aufgabe der Erfindung ist es, einen Satellitensolargeneratorflügel zu schaffen, der eine sichere Lagerung der Solarpanels während des Transports mit einfachen Mitteln gewährleistet.

Die Aufgabe wird erfindungsgemäß durch einen Satellitensolargeneratorflügel gelöst, mit wenigstens zwei starren Solarpanels und wenigstens einem halbstarren Solarpanel, die derart miteinander verbunden sind, dass die Solarpanels eine Betriebsstellung und eine Transportstellung einnehmen können, wobei die Solarpanels in der Transportstellung übereinanderliegend gehalten sind, wobei das halbstarre Solarpanel in der Transportstellung von den wenigstens zwei starren Solarpanels entkoppelt ist, so dass das halbstarre Solarpanel in der Transportstellung freischwingend zwischen den wenigstens zwei starren Solarpanels angeordnet ist. Der Grundgedanke der Erfindung ist demnach ein völlig neuer Weg, da das halbstarre Solarpanel von den starren Solarpanels entkoppelt ist. Im Gegensatz zum Stand der Technik wird dem halbstarren Solarpanel, das zwischen den beiden starren Solarpanels liegt, eine Schwingungsfreiheit eingeräumt, sodass sich das halbstarre Solarpanel in der Transportstellung relativ zu den starren Solarpanels bewegen kann. Es ist erkannt worden, dass die halbstarren Solarpanels je nach Steifigkeit ein deutlich anderes Schwingungsverhalten im Vergleich zu den starren Solarpanels zeigen, sodass eine Schwingungskoppelung aller Solarpanels zu einem undefinierten Schwingungsverhalten des gefalteten Satellitensolargeneratorflügels während der Startphase führt. Gemäß dem Erfindungsgedanken ist das halbstarre Solarpanel daher von den übrigen Solarpanels schwingungsentkoppelt.

Generell ist das halbstarre Solarpanel flexibler als das starre Solarpanel ausgebildet.

Ein Aspekt der Erfindung sieht wenigstens eine zum Erreichen der Betriebsstellung lösbare Koppelungseinheit vor, wobei die starren Solarpanels in der Transportstellung über die Koppelungseinheit miteinander fest gekoppelt sind. Über die Koppelungseinheit werden die
Solarpanels in ihrer Betriebsstellung gehalten, wobei die Koppelungseinheit gelöst werden kann, sich die Solarpanels entfalten und der Satellitensolargeneratorflügel in seine Betriebsstellung übergeht. Die Koppelungseinheit koppelt die starren Solarpanels insbesondere derart miteinander, dass ein vordefinierter Abstand zwischen ihnen vorliegt. Bei der Koppelungseinheit kann es sich um ein Niederhaltersystem handeln, welches wenigstens eine Buchse pro starrem Solarpanel und einen Stift umfasst, der in die Buchse eingreift.

Ein weiterer Aspekt der Erfindung sieht vor, dass die wenigstens zwei starren Solarpanels in der Transportstellung miteinander schwingungsgekoppelt sind, insbesondere über die wenigstens eine Koppelungseinheit. Die wenigstens zwei starren Solarpanels bilden in der Transportstellung demnach eine Art erstes Schwingungssystem des Satellitensolargeneratorflügels, welches unabhängig vom halbstarren Solarpanel ist, obwohl dieses zwischen den beiden starren Solarpanels angeordnet ist. Die Solarpanels weisen in der Transportstellung somit eine Art Sandwichkonfiguration auf, bei der die umgebenden starren Solarpanels schwingungsgekoppelt zueinander und schwingungsentkoppelt zum zwischengelagerten halbstarren Solarpanel sind.

Ein weiterer Aspekt der Erfindung sieht vor, dass das halbstarre Solarpanel wenigstens eine Ausnehmung aufweist, die im Bereich der Koppelungseinheit vorgesehen ist, sodass sich zumindest ein Teil der Koppelungseinheit durch die Ausnehmung erstreckt, ohne das halbstarre Solarpanel an der Koppelungseinheit anzubinden. Die Koppelungseinheit kann somit in jedem Bereich der Solarpanels vorgesehen sein, insbesondere in einem mittigen Bereich der Solarpanels. Sofern es sich bei der Koppelungseinheit um ein bekanntes Niederhaltersystem handelt, erstreckt sich der Stift oder die Buchse demnach durch die Ausnehmung des halbstarren Solarpanels.

Insbesondere weisen zumindest die starren Solarpanels Bewegungsbegrenzer auf, die die Bewegungsamplitude des halbstarren Solarpanels zu den starren Solarpanels begrenzen. Aufgrund der Bewegungsbegrenzer kann das halbstarre Solarpanel nur bis zu einer bestimmten Auslenkung frei schwingen. Bei den Schwingungsamplituden kann es sich um die Schwingungsamplituden aus der Panelebene heraus handeln.

Ein weiterer Aspekt der Erfindung sieht vor, dass in der Transportstellung ein Spalt zwischen den Bewegungsbegrenzern und einer zugeordneten Anschlagfläche am gegenüberliegenden Bauteil vorhanden ist, um ein Schwingen der Solarpanels zueinander zu erlauben. Das halbstarre Solarpanel kann somit über die Größe des Spalts senkrecht zur Panelebene frei schwingen, wobei das halbstarre Solarpanel bei einer höheren Schwingungsamplitude mit der Anschlagfläche an einen der zugeordneten Bewegungsbegrenzer anschlägt. Hierdurch wird die Schwingungsamplitude oder Schwingungsauslenkung begrenzt.

Gemäß einem weiteren Aspekt der Erfindung sind die Bewegungsbegrenzer und die zugeordneten Anschlagflächen derart ausgebildet, dass die Bewegungen des halbstarren Solarpanels in Panelebene relativ zu den starren Solarpanels begrenzt sind. Bei den Bewegungen in Panelebene handelt es sich beispielsweise um Bewegungen in den beiden Raumrichtungen x und y, wohingegen die Schwingungsamplitude in z-Richtung begrenzt wird. Bei Kontakt der Bewegungsbegrenzer und der zugeordneten Anschlagfläche kann ferner eine hohe Kraftübertragung stattfinden.

Ferner greifen die Bewegungsbegrenzer und die entsprechend geformten Anschlagflächen vorzugsweise in jeder Relativstellung der Panels, das heißt in jeder Schwingungsposition in Transportstellung ineinander, sodass ein Anschlag in Panelebene gegeben ist.

Ein weiterer Aspekt der Erfindung sieht vor, dass das halbstarre Solarpanel Versteifungselemente aufweist. Das halbstarre Solarpanel kann demnach sehr flexibel und leicht ausgebildet sein, beispielsweise durch eine Folie. Die Versteifungselemente gewährleisten, dass das Solarpanel dennoch die benötigte Steifigkeit aufweist. Hierdurch ist ein halbstarres Solarpanel mit einem extrem hohen Leistungsgewicht möglich.

Insbesondere wirken die Versteifungselemente und die Bewegungsbegrenzer als Anschlagflächen zusammen, um die Bewegungsamplitude des halbstarren Solarpanels zu begrenzen. Dies spart weiter Gewicht ein, da die Versteifungselemente, welche zur Versteifung des halbstarren Solarpanels vorgesehen sind, gleichzeitig die Anschlagflächen für die Bewegungsbegrenzer ausbilden. Das halbstarre Solarpanel ist somit besonders einfach aufgebaut. Zudem entspricht die Bauweise des halbstarren Solarpanels einer Leichtbauweise.

Gemäß einem Aspekt der Erfindung bilden die Versteifungselemente zumindest einen Rahmen für das halbstarre Solarpanel. Hierdurch ist sichergestellt, dass das halbstarre Solarpanel verwindungssteif und biegesteif ist und seine Form weitestgehend beibehält.

Ein weiterer Aspekt der Erfindung sieht vor, dass zwei in der Transportstellung unmittelbar übereinanderliegende halbstarre Solarpanels vorgesehen sind, die in der Transportstellung zwischen zwei starren Solarpanels freischwingend angeordnet sind. Demnach können auch mehr als nur ein halbstarres Solarpanel zwischen den beiden einschließenden starren Solarpanels zwischengelagert sein, die freischwingend sind. Über die größere Anzahl der halbstarren Solarpanels kann die Gesamtleistung des Satellitensolargeneratorflügels erhöht werden, da dessen aktive Gesamtfläche größer ist. Das Gesamtgewicht des Satellitensolargeneratorflügels steigt jedoch nur um einen verhältnismäßig geringen Betrag, sodass sich das Leistungsgewicht des Satellitensolargeneratorflügels enorm erhöht.

Insbesondere weist zumindest eines der beiden halbstarren Solarpanels Bewegungsbegrenzer auf, um die Amplitude der Relativbewegung zum anderen halbstarren Solarpanel zu begrenzen. Über die Bewegungsbegrenzer wird erreicht, dass die beiden freischwingenden halbstarren Solarpanels während der Startphase nicht aneinanderschlagen und/oder beschädigt werden.

Ein weiterer Aspekt der Erfindung sieht vor, dass zwei starre Solarpanels und die zugeordneten halbstarren Solarpanels jeweils ein Solarpanelsystem bilden, wobei mehrere Solarpanelsysteme vorgesehen sind. Der Satellitensolargeneratorflügel ist demnach modular erweiterbar, wobei typischerweise zwei halbstarre Solarpanels, die in der Transportstellung zwischen zwei starren Solarpanels angeordnet sind, mit diesen beiden äußeren starren Solarpanels ein Solarpanelsystem bilden. Die starren Solarpanels eines Solarpanelsystems sind miteinander schwingungsgekoppelt. Sie können aber auch mit den starren Solarpanels eines weiteren Solarpanelsystems schwingungsgekoppelt sein. Je nach Größe des Satellitensolargeneratorflügels kann vorgesehen sein, dass alle starren Solarpanels miteinander schwingungsgekoppelt sind, wobei die halbstarren Solarpanels zwischen zwei aufeinanderfolgenden starren Solarpanels schwingungsentkoppelt zwischengelagert sind, vorzugsweise paarweise.

Ferner betrifft die Erfindung einen Satelliten mit wenigstens einem Solargeneratorflügel der zuvor beschriebenen Art. Typischerweise weist ein Satellit jedoch zwei derartige Satellitensolargeneratorflügel auf, da dies für die Lageregelung vorteilhaft ist.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Satellitensolargeneratorflügels in seiner Betriebsstellung,
- Figur 2 den Satellitensolargeneratorflügel aus Figur 1 in seiner Transportstellung,
- Figur 3 eine Perspektivansicht des gefalteten Solargeneratorflügels, ohne das obere starre Solarpanel,
- Figur 4 eine Detailansicht eines halbstarren Solarpanels aus Figur 3,
- Figur 5 eine Schnittdarstellung durch den Satellitensolargeneratorflügel der Figur 2 im Bereich der Koppelungseinheit,
- Figur 6a eine Schnittdarstellung des Satellitensolargeneratorflügels der Figur 2 im Randbereich zu einem ersten Zeitpunkt und Belastungszustand während der Startphase,
- Figur 6b eine Schnittdarstellung des Satellitensolargeneratorflügels der Figur 2 im Randbereich zu einem zweiten Zeitpunkt und Belastungszustand während der Startphase,
- Figur 7 eine Schnittdarstellung des Satellitensolargeneratorflügels der Figur 2 im Randbereich zu einem dritten Zeitpunkt und Belastungszustand während der Startphase,
- Figur 8 eine Detailansicht des Satellitensolargeneratorflügels der Figur 3, wobei zur Verbesserung der Übersichtlichkeit das in Figur 3 gezeigte starre Solarpanel weggelassen ist,
- Figur 9 eine Schnittdarstellung des Satellitensolargeneratorflügels in seiner Transportstellung im Randbereich gemäß einer zweiten Ausführungsform,
- Figur 10 eine Schnittdarstellung des Satellitensolargeneratorflügels in seiner Transportstellung im Randbereich gemäß einer dritten Ausführungsform, und
- Figur 11 eine schematische Darstellung eines erfindungsgemäßen Satelliten.

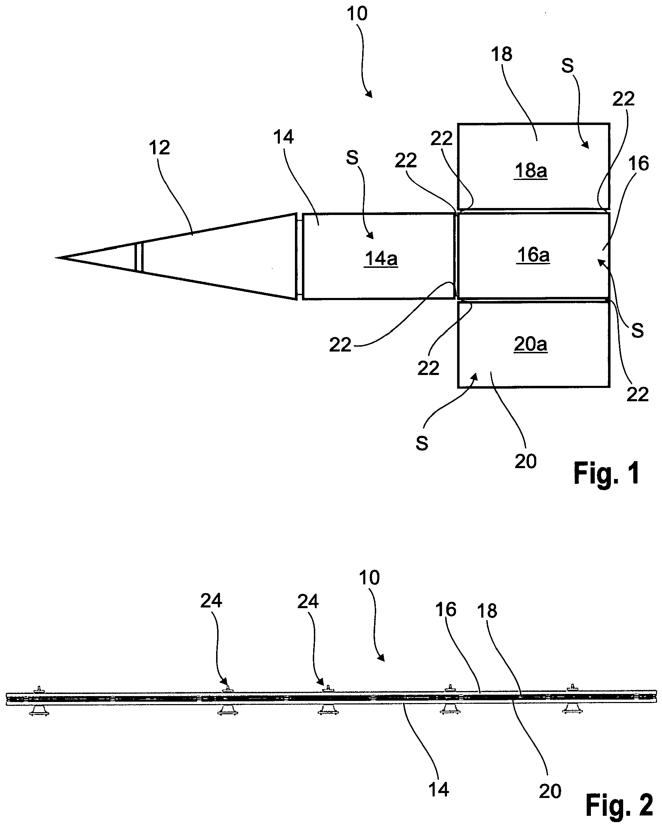

In Figur 1 ist ein Satellitensolargeneratorflügel 10 in seiner Betriebsstellung schematisch gezeigt, der über ein Gelenkgestänge 12, auch Joch genannt, an einer hier nicht dargestellten Satellitenwand befestigt ist.

Der Satellitensolargeneratorflügel 10 umfasst in der gezeigten Ausführungsform zwei starre Solarpanels 14, 16 sowie zwei halbstarre Solarpanels 18, 20, die als laterale Solarpanels zu dem starren Solarpanel 16 ausgebildet sind.

Die Solarpanels 14 bis 20 weisen jeweils eine Solarzellenseite 14a bis 20a auf, auf der die Solarzellen S aufgebracht sind und die in der Betriebsstellung zur Sonne ausgerichtet werden.

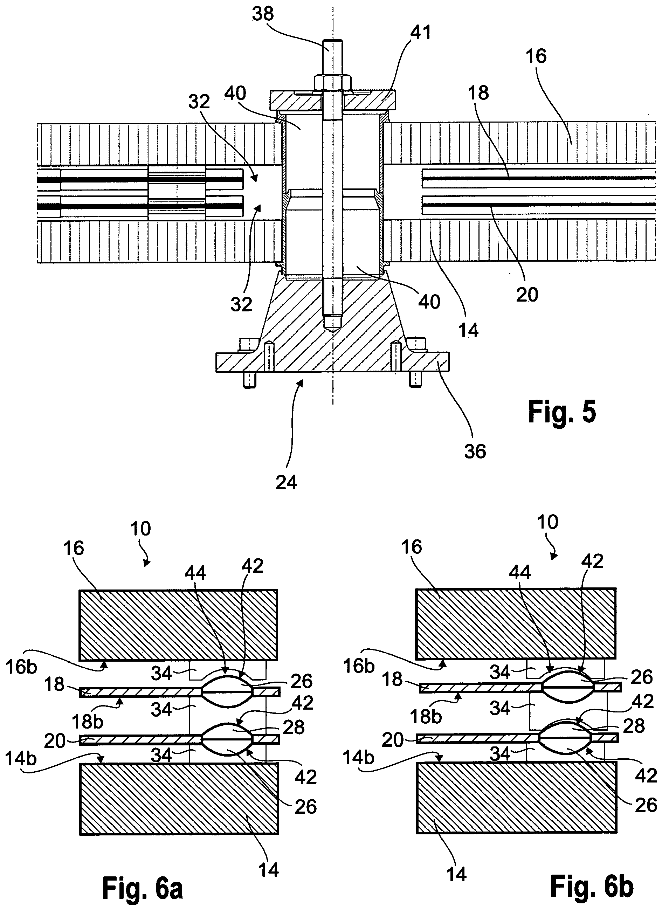

Die einzelnen Solarpanels 14 bis 20 sind über Gelenke 22 schwenkbar miteinander verbunden, die am Rand der Solarpanels 14 bis 20 angeordnet sind und über die die Solarpanels 14 bis 20 aus der in Figur 2 gezeigten gefalteten Transportstellung in die in Figur 1 gezeigte Betriebsstellung überführt werden können. Hierzu sind die Gelenke 22 typischerweise in Entfaltungsrichtung, das heißt in Richtung Betriebsstellung vorgespannt, wobei die Solarpanels 14, 16 über Koppelungseinheiten 24 zunächst in ihrer Transportstellung lagesicher gehalten werden (Figur 2). Die genaue Funktionsweise der Koppelungseinheiten 24 wird später anhand der Figur 5 erläutert.

Die in Figur 2 gezeigte Transportstellung zeichnet sich dadurch aus, dass die Solarpanels 14 bis 20 derart zueinander gefaltet sind, dass sie übereinanderliegend deckungsgleich angeordnet sind. In diesem gefalteten Zustand sind sie beabstandet zu einer Satellitenseitenwand angeordnet.

Alternativ können jedoch die Solarpanels 14 bis 20 unterschiedliche Größen aufweisen, insbesondere die lateralen Solarpanels. Beispielsweise können diese nur halb so hoch sein.

Aus der in Figur 2 gezeigten Transportstellung des Satellitensolargeneratorflügels 10 geht ferner hervor, dass die Solarpanels 14 bis 20 im gefalteten Zustand derart angeordnet sind, dass die beiden starren Solarpanels 14, 16 die beiden halbstarren Solarpanels 18, 20 zwischen sich aufgenommen haben. Das bedeutet, der Satellitensolargeneratorflügel 10 ist in seiner Transportstellung derart gefaltet, dass die beiden halbstarren Solarpanels 18, 20 zwischen den beiden starren Solarpanels 14, 16 liegen.

Die starren Solarpanels 14, 16, die stärker und dicker als die halbstarren Solarpanels 18, 20 ausgebildet sind, bilden demnach in der Transportstellung einen Außenschutz für die dünnen halbstarren Solarpanels 18, 20. Dies betrifft nicht nur mechanische Belastungen, sondern auch strahlungsbedingte Belastungen während der Transportphase im Weltall.

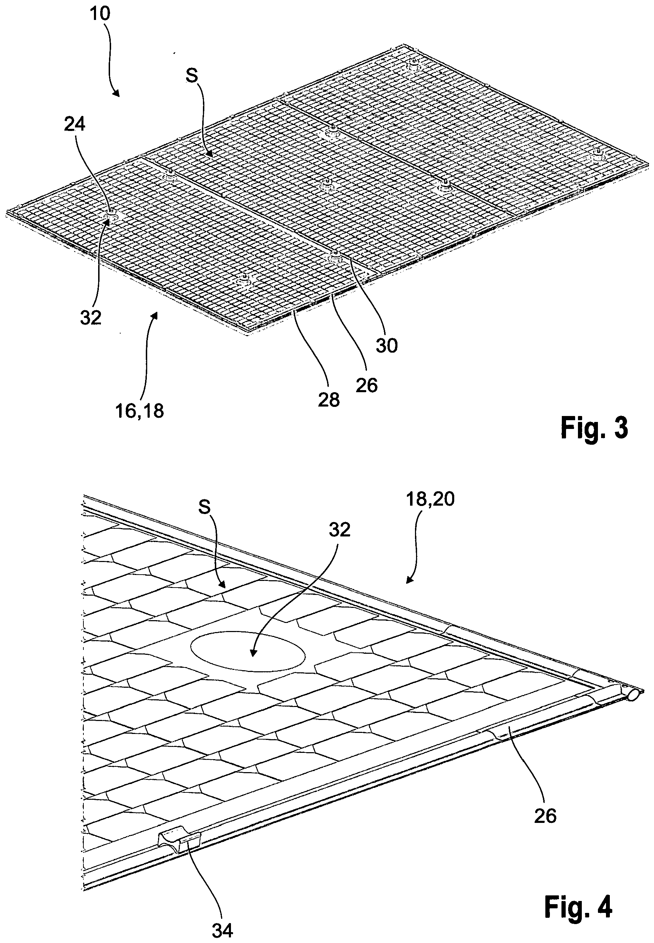

In Figur 3 ist der Solargeneratorflügel 10 ohne das außenliegende obere starre Solarpanel 14 oder 16 in einer Perspektivdarstellung gezeigt, sodass eines der beiden halbstarren Solarpanels 18 oder 20 zu sehen ist. Ferner sind ebenfalls Teile der Koppelungseinheiten 24 dargestellt.

Beide Solarpanels 18, 20 sind bevorzugt identisch ausgebildet.

Das halbstarre Solarpanel 18, 20 ist aus einer Folie aufgebaut, beispielsweise aus einer verstärkten Kevlarfolie, auf der die Solarzellen S aufgebracht sind. Damit das halbstarre Solarpanel 18, 20 trotzdem seine ebene Form beibehält, weist das halbstarre Solarpanel 18, 20 Versteifungselemente 26 auf, die einen Rahmen 28 des halbstarren Solarpanels 18, 20 und zusätzliche Querstreben 30 bilden, welche parallel zu den kürzeren Längsseiten des Rahmens 28 verlaufen. Über die Versteifungselemente 26 erhalten die halbstarren Solarpanels 18, 20 die benötigte Steifigkeit, wobei die gewünschte Steifigkeit der halbstarren Solarpanels 18, 20 beispielsweise über die Anzahl der Querstreben 30 erreicht werden kann. Alternativ kann die gewünschte Steifigkeit auch durch Dichten- oder Dickenunterschiede in der Folie erreicht werden.

Ferner weist das halbstarre Solarpanel 18, 20 mehrere Ausnehmungen 32 auf, die im Bereich der jeweiligen Koppelungseinheiten 24 vorgesehen sind, wie aus Figur 3 ersichtlich ist.

In Figur 4 ist eine Teilansicht eines der halbstarren Solarpanels 18 oder 20 gezeigt.

In dieser Darstellung ist eine der Ausnehmungen 32 gut zu erkennen sowie die Anordnung der Solarzellen S auf der Solarzellenseite 18a, 20a des halbstarren Solarpanels 18, 20.

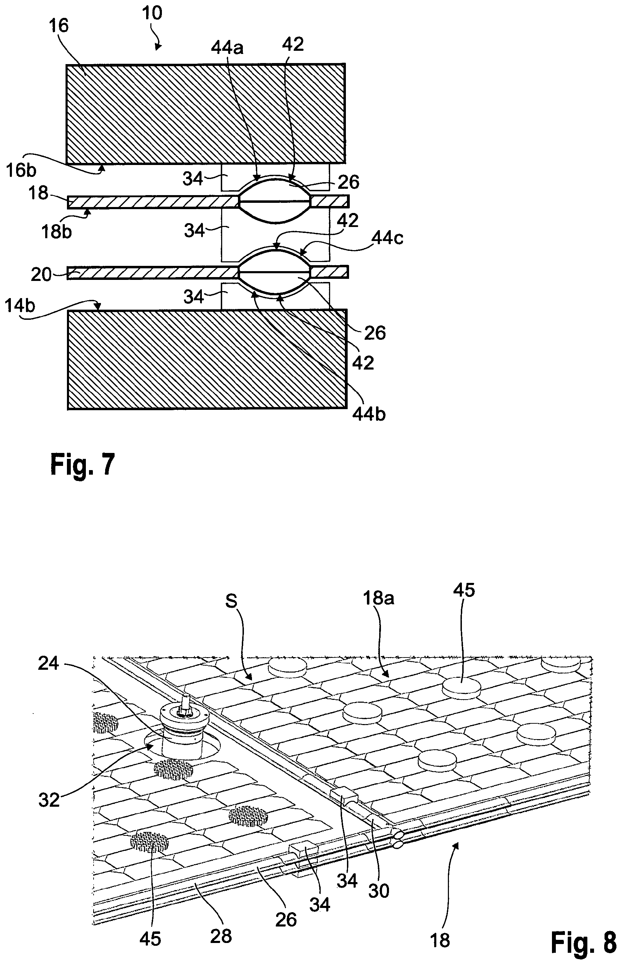

Ferner ist in Figur 4 ein Teil des Rahmens 28 gezeigt, auf dem ein Bewegungsbegrenzer 34 angeordnet ist, dessen Funktion anhand der Figuren 6a, 6b und 7 nachfolgend erläutert wird.

In Figur 5 ist der Satellitensolargeneratorflügel 10 aus Figur 2 im Querschnitt gezeigt, wobei ein Bereich des gefalteten Satellitensolargeneratorflügels 10 um eine der Koppelungseinheiten 24 dargestellt ist.

Die Koppelungseinheit 24 weist ein Sockelelement 36 auf, welches an der nicht dargestellten Satellitenseitenwand befestigt wird. Ferner umfasst die Koppelungseinheit 24 einen Stift 38 sowie jeweils eine Buchse 40 pro starrem Solarpanel 14, 16.

Der Stift 38 koppelt die beiden starren Solarpanels 14, 16 miteinander, indem der Stift 38 die Buchsen 40 axial gegeneinanderdrückt. Der Stift 38 greift in das Sockelelement 36 und eine gegenüberliegende Stirnwand 41 ein, sodass die starren Solarpanels 14, 16 mit der Satellitenseitenwand gekoppelt und zueinander fest beabstandet sind.

Die Koppelungseinheit 24 dient dazu, dass die übereinanderliegenden Solarpanels 14 bis 20 entgegen der Vorspannung der Gelenke 22 in ihrer Transportstellung in einem vordefinierten Abstand zueinander fixiert gehalten werden.

Zur Überführung des Satellitensolargeneratorflügels 10 aus der in Figur 2 gezeigten Transportstellung in die in Figur 1 gezeigte Betriebsstellung wird der Stift 38 gelöst, sodass sich der Satellitensolargeneratorflügel 10 aufgrund der vorgespannten Gelenke 22 entfalten kann. Das Lösen des Stifts 38 kann pyrotechnisch, elektrisch oder mechanisch erfolgen.

Die beiden starren Solarpanels 14, 16 sind demnach während der Startphase der Trägerrakete über die Koppelungseinheit 24 miteinander schwingungsgekoppelt. Somit beeinflussen sich die Schwingungen der beiden starren Solarpanels 14, 16 während der Startphase gegenseitig.

Aus Figur 5 geht ferner hervor, dass die beiden halbstarren Solarpanels 18, 20 nicht mit der Koppelungseinheit 24 gekoppelt sind, da sich der Stift 38 und die Buchsen 40 der Koppelungseinheit 24 durch die jeweilige Ausnehmung 32 der halbstarren Solarpanels 18, 20 erstrecken und einen radialen Abstand von den Rändern der Ausnehmungen 32 haben.

Über die Koppelungseinheit 24 und die Ausnehmungen 32 in den halbstarren Solarpanels 18, 20 wird somit erreicht, dass der Satellitensolargeneratorflügel 10 im gefalteten Zustand oder in seiner Transportstellung zwei voneinander separate Schwingungssysteme aufweist. Das erste Schwingungssystem ist durch das gekoppelte Schwingungssystem der starren Solarpanels 14, 16 und das zweite Schwingungssystem durch die nicht gekoppelten, freischwingenden, halbstarren Solarpanels 18, 20 gebildet.

In den Figuren 6a, 6b und 7 ist der Satellitensolargeneratorflügel 10 erneut in seiner Transportstellung in einer vergrößerten Schnittdarstellung gezeigt, wobei die Figuren 6a, 6b und 7 einen Randbereich des Satellitensolargeneratorflügels 10 während der Startphase schematisch zu drei unterschiedlichen Zeitpunkten und Belastungszuständen zeigen.

Im Randbereich weisen die halbstarren Solarpanels 18, 20 die Versteifungselemente 26 auf, die den Rahmen 28 bilden. Die Versteifungselemente 26 weisen Anschlagflächen 42 für die Bewegungsbegrenzer 34 auf. Die Bewegungsbegrenzer 34 sind senkrecht zur jeweiligen Panelebene übereinanderliegend im Bereich der Versteifungselemente 26 angeordnet. Hierdurch können die Bewegungsbegrenzer 34 mit den Anschlagflächen 42 zusammenwirken, um die Relativbewegung zweier benachbarter Solarpanels 14 bis 20 zueinander zu begrenzen.

Die beiden starren Solarpanels 14, 16 werden, wie bereits erwähnt, über die Koppelungseinheit 24 in einem vordefinierten Abstand zueinander gehalten, welcher größer ist als die Höhe der dazwischenliegenden halbstarren Solarpanels 18, 20 samt Versteifungselementen 26 und Bewegungsbegrenzern 34. Dadurch ist sichergestellt, dass in der Transportstellung ein Spalt 44 zwischen wenigstens einem Bewegungsbegrenzer 34 und einer Anschlagfläche 42 vorliegt.

Dieser Spalt 44 garantiert, dass die halbstarren Solarpanels 18, 20 freischwingend zwischen den beiden schwingungsgekoppelten starren Solarpanels 14, 16 gelagert sind. Während der Startphase der Trägerrakete können die halbstarren Solarpanels 18, 20 somit mindestens um die Größe des Spalts 44 senkrecht zur Panelebene relativ zu den starren Solarpanels 14, 16 frei schwingen. Die Schwingungsamplitude der freien Relativbewegung der halbstarren Solarpanels 18, 20 wird erst bei Kontakt der Anschlagflächen 42 mit den Bewegungsbegrenzern 34 begrenzt.

In der gezeigten Ausführungsform weisen die beiden starren Solarpanels 14, 16 jeweils an ihrer Rückseite 14b, 16b die Bewegungsbegrenzer 34 auf, die mit den Versteifungselementen 26 der halbstarren Solarpanels 18, 20 zusammenwirken.

Zudem weist das halbstarre Solarpanel 18 ebenfalls auf seiner Rückseite 18b Bewegungsbegrenzer 34 auf, die mit den Anschlagflächen 42 der Versteifungselemente 26 des anderen halbstarren Solarpanels 20 zusammenwirken, um die Relativbewegung der halbstarren Solarpanels 18, 20 zueinander zu begrenzen.

Die Versteifungselemente 26 der halbstarren Solarpanels 18, 20 sichern demnach nicht nur die Steifigkeit der halbstarren Solarpanels 18, 20, sondern dienen gleichzeitig zur Bewegungsamplitudenbegrenzung, indem sie an den Bewegungsbegrenzern 34 anschlagen können.

Die Versteifungselemente 26 weisen im Querschnitt eine gewölbte, zum Beispiel ovale Form auf, die aus zwei im Querschnitt teilkreisförmigen Bereichen gebildet ist. Die Versteifungselemente 26 sind dabei als Hohlrohrabschnitte ausgebildet und weisen eine Höhe im Bereich von 4 mm bis 18 mm auf, insbesondere 11 mm. Dadurch sind die Versteifungselemente 26 elastisch dämpfend ausgebildet, da sie sich bei Belastung elastisch verformen können.

Die Bewegungsbegrenzer 34 können ebenfalls aus einem elastischen Material ausgebildet sein, sodass die Schwingungsamplituden sowie weitere Bewegungsamplituden noch besser dämpfend abgebremst und begrenzt werden können.

Ferner sind die Formen der Versteifungselemente 26 und der Bewegungsbegrenzer 34 derart aufeinander abgestimmt (insbesondere gegengleich ausgebildet), dass Bewegungen parallel zur Panelebene ebenfalls über die ineinandergreifenden Bewegungsbegrenzer 34 und die Versteifungselemente 26 begrenzt werden können.

Dies ist in Figur 6b dargestellt, in der ein beispielhafter Belastungszustand des Satellitensolargeneratorflügels 10 dargestellt ist, der die maximale Auslenkung des halbstarren Solarpanels 18 in Panelebene verdeutlicht.

Die relative Bewegung des halbstarren Solarpanels 18 wird in der Panelebene zu den direkt benachbarten Solarpanels 14, 20 begrenzt, da das Versteifungselement 26 des halbstarren Solarpanels 18 mit einem rechten Randabschnitt der Anschlagfläche 42 den Bewegungsbegrenzer 34 des starren Solarpanels 16 kontaktiert. Ferner kontaktiert das Versteifungselement 26 des halbstarren Solarpanels 20 mit einem linken Randabschnitt der Anschlagfläche 42 den Bewegungsbegrenzer 34 des halbstarren Solarpanels 18. Hierdurch ist die Relativbewegung des halbstarren Solarpanels 18 in Panelebene wirksam begrenzt.

Es wird somit nicht nur die Schwingungsamplitude begrenzt, sondern jegliche Bewegung der halbstarren Solarpanels 18, 20 relativ zu den starren Solarpanels 14, 16 ab einer bestimmten Auslenkung.

Der zumindest eine Spalt 44 und die Krümmungen der ineinandergreifenden Bewegungsbegrenzer 34 und Versteifungselemente 26 erlauben in keiner Relativstellung ein seitliches Herausbewegen der halbstarren Solarpanels 18, 20 aus den starren Solarpanels 14, 16.

Hierdurch kann ein seitliches Herausrutschen der halbstarren Solarpanels 18, 20 aus der sie umschließenden Hülle während der Startphase verhindert werden, die von den beiden starren Solarpanels 14, 16 gebildet ist.

In Figur 7 ist der Satellitensolargeneratorflügel 10 zu einem dritten Zeitpunkt oder Belastungszustand während der Startphase gezeigt, in dem ein anderer Schwingungszustand vorliegt, der auch als Neutralstellung bezeichnet werden kann. Zu diesem zweiten Zeitpunkt liegt zwischen jedem der Bewegungsbegrenzer 34 und seiner zugeordneten Anschlagfläche 42 ein Spalt 44a bis 44c vor. Die beiden halbstarren Solarpanels 18, 20 haben sich relativ zu den starren Solarpanels 14, 16 derart bewegt, dass jeweils ein Spalt 44a, 44b zwischen dem an der Rückseite 14b, 16b der starren Solarpanels 14, 16 angeordneten Bewegungsbegrenzer 34 und der zugeordneten Anschlagfläche 42 entstanden ist. Ferner haben sich auch die beiden halbstarren Solarpanels 18, 20 derart relativ zueinander bewegt, dass auch zwischen ihnen ein Spalt 44c entstanden ist.

Aus dem Vergleich der Figuren 6a, 6b und 7, die zwei unterschiedliche beispielhafte Schwingungszustände des gefalteten Satellitensolargeneratorflügels 10 während der Startphase zeigen, wird deutlich, dass die halbstarren Solarpanels 18, 20 in der Transportstellung freischwingend zwischen den beiden starren Solarpanels 14, 16 angeordnet sind, seitlich aber nicht ausweichen können.

In Figur 8 ist der gefaltete Satellitensolargeneratorflügel 10 in einer Perspektivdarstellung gezeigt, wobei das obere starre Solarpanel 16 nicht dargestellt ist.

Die an der Rückseite 16b des oberen starren Solarpanels 16 angeordneten Bewegungsbegrenzer 34 sind jedoch dargestellt und liegen in der gezeigten Darstellung auf den Versteifungselementen 26 bzw. den zugeordneten Anschlagflächen 42 auf.

Ferner geht aus der Figur 8 hervor, dass die Buchsen 40 der Koppelungseinheit 24 sich ohne Berührung der Umrandung der Ausnehmung 32 durch diese erstrecken. Hieraus wird wiederum deutlich, dass die halbstarren Solarpanels 18, 20 nicht mit der Koppelungseinheit 24 gekoppelt sind.

Die Ausnehmungen 32 sind ferner derart dimensioniert, dass trotz maximaler Auslenkung der halbstarren Solarpanels 18, 20 kein Kontakt zwischen den Buchsen 40 und dem Rand der Ausnehmung 32 auftritt. Hierzu sind die Ausnehmungen 32 in etwa kreisförmig ausgebildet und weisen einen Durchmesser von 50 mm bis 150 mm auf, insbesondere 100 mm.

Die Folie der halbstarren Solarpanels 18, 20 weist ferner eine Dicke von 50 bis 200 µm auf, insbesondere 100 µm, sodass sich die halbstarren Solarpanels 18, 20 auch ungehindert entfalten können. Dagegen haben die starren Solarpanels 14, 16, die aus einer CFK-Honigwabenstruktur aufgebaut sind, eine Dicke von 15 mm bis 25 mm. Diese Dicke bietet ausreichend Schutz vor der Strahlung im Weltall.

Des Weiteren sind in Figur 8 mehrere unterschiedliche Dämpfungselemente 45 vorgesehen, die auf der Solarzellenseite 18a des halbstarren Solarpanels 18 angeordnet sind. Teilweise sind die Dämpfungselemente 45 sogar auf den Solarzellen S selbst angeordnet. Zudem können die Dämpfungselemente 45 auch in Aussparungen der Solarzellen S angeordnet sein, um die aktive Fläche der Solarzellen S nicht zu beeinträchtigen.

Des Weiteren können derartige Dämpfungselemente 45 auch auf der hier nicht gezeigten Rückseite der halbstarren Solarpanels 16, 18 angeordnet sein. Diese Dämpfungselemente 45 können beispielsweise mit den Dämpfungselementen 45 auf der gegenüberliegenden Solarzellenseite des benachbarten Solarpanels zusammenwirken.

Die Dämpfungselemente 45 sollen generell die Solarzellen S schützen. Derartige Dämpfungselemente 45 können auf allen Solarzellenseiten 14a bis 20a der Solarpanels 14 bis 20 vorgesehen sein, um die Solarzellen S zu schützen. Die Dämpfungselemente 45 bilden weitere nach Überbrückung des Spalts 44 oder der Spalte 44a - 44c erst wirkende Bewegungsbegrenzer.

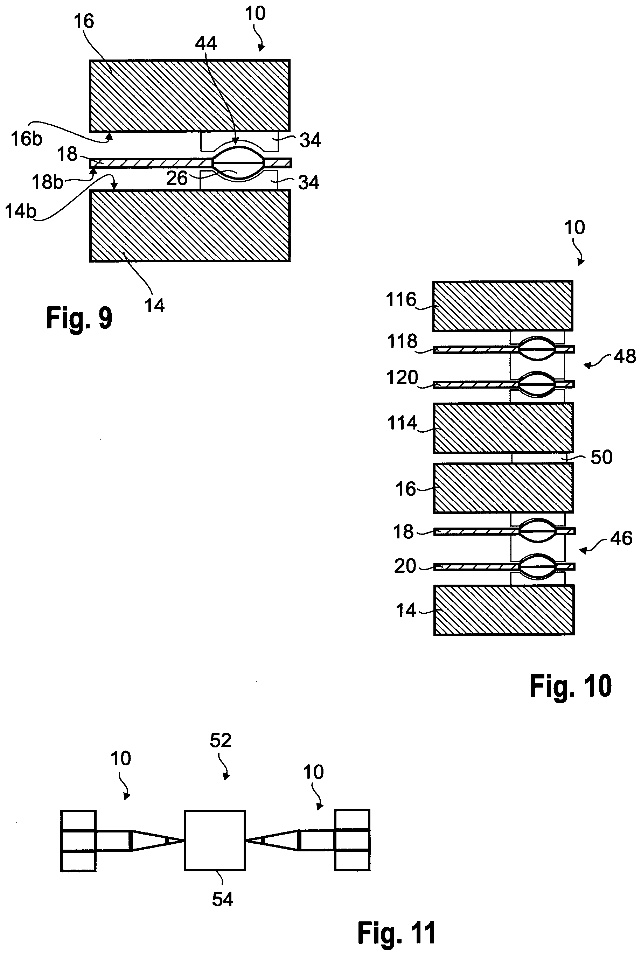

In Figur 9 ist eine zweite Ausführungsform des Satellitensolargeneratorflügels 10 dargestellt, welcher zwei starre Solarpanels 14, 16 und lediglich ein halbstarres Solarpanel 18 aufweist. Das halbstarre Solarpanel 18 ist zwischen den beiden starren Solarpanels 14, 16 angeordnet, wobei die beiden starren Solarpanels 14, 16 auf ihren jeweiligen Rückseiten 14b, 16b Bewegungsbegrenzer 34 aufweisen. Die Bewegungsbegrenzer 34 wirken in analoger Weise zur zuvor beschriebenen Ausführungsform mit den Versteifungselementen 26 bzw. den Anschlagflächen 42 des halbstarren Solarpanels 18 zusammen, sodass die Bewegungsamplituden des halbstarren Solarpanels 18 begrenzt werden.

Alternativ kann auch vorgesehen sein, dass mehr als zwei halbstarre Solarpanels zwischen zwei schwingungsgekoppelten starren Solarpanels 14, 16 angeordnet sind, die freischwingen können. Hierzu muss nur der Abstand der beiden starren Solarpanels 14, 16 über die Koppelungseinheit 24 entsprechend angepasst werden.

In Figur 10 ist eine dritte Ausführungsform des Satellitensolargeneratorflügels 10 gezeigt, der vier starre Solarpanels 14, 16, 114, 116 sowie vier halbstarre Solarpanels 18, 20, 118, 120 umfasst, also insgesamt acht Solarpanels.

In der gezeigten Ausführungsform sind jeweils zwei halbstarre Solarpanels 18, 20 in bekannter Weise zwischen zwei starren Solarpanels 14, 16 angeordnet. Diese beiden halbstarren Solarpanels 18, 20 und die beiden sie umgebenden starren Solarpanels 14, 16 bilden ein erstes Panelsystem 46 des Satellitensolargeneratorflügels 10.

Die beiden anderen halbstarren Solarpanels 118, 120 sowie die beiden starren Solarpanels 114, 116 bilden in analoger Weise ein zweites Panelsystem 48 des Satellitensolargeneratorflügels 10, sodass der Satellitensolargeneratorflügel 10 gemäß der dritten Ausführungsform aus zwei Panelsystemen 46, 48 aufgebaut ist.

Auf der Vorderseite wenigstens eines der beiden starren Solarpanels 16, 114 ist ferner wenigstens ein Dämpferelement 50 vorgesehen, welches verhindert, dass die beiden Solarzellenseiten 16a, 114a der beiden gegenüberliegend angeordneten Solarpanels 16, 114 während der Schwingungen sich kontaktieren, wodurch die Solarzellen S beschädigt werden würden. Dieses Dämpfungselement 50 ist vor allem dann notwendig, wenn die Solarpanelsysteme 46, 48 nicht miteinander schwingungsgekoppelt sind.

Die starren Solarpanels 14, 16, 114, 116 der dritten Ausführungsform können über eine gemeinsame Koppelungseinheit 24 miteinander schwingungsgekoppelt sein, sodass der Satellitensolargeneratorflügel 10 der dritten Ausführungsform ebenfalls ein erstes Schwingungssystem aufweist, das aus allen starren Solarpanels 14, 16, 114, 116 gebildet ist.

Ferner können auch noch weitere Panelsysteme bei einem Satellitensolargeneratorflügel 10 vorgesehen sein. Daraus folgt, dass der Satellitensolargeneratorflügel 10 modular erweiterbar ist, vorzugsweise um zwei starre Solarpanels mit zwischengelagerten halbstarren Solarpanels.

Mit einem derartigen Satellitensolargeneratorflügel 10 kann ein Leistungsgewicht von über 150 W/kg erreicht werden, wobei sämtliche Massen eingerechnet sind.

In Figur 11 ist zudem ein Satellit 52 schematisch dargestellt, der einen Satellitenkörper 54 sowie zwei Satellitensolargeneratorflügel 10 der zuvor beschriebenen Art umfasst, die an entgegengesetzten Seiten des Satellitenkörpers 54 befestigt sind.

## Patentansprüche

1. Satellitensolargeneratorflügel (10) mit wenigstens zwei starren Solarpanels (14, 16, 114, 116) und wenigstens einem halbstarren Solarpanel (18, 20, 118, 120), die derart miteinander verbunden sind, dass die Solarpanels (14-20, 114-120) eine Betriebsstellung und eine Transportstellung einnehmen können, wobei die Solarpanels (14-20, 114-120) in der Transportstellung übereinanderliegend gehalten sind, **dadurch gekennzeichnet, dass** das halbstarre Solarpanel (18, 20, 118, 120) in der Transportstellung von den wenigstens zwei starren Solarpanels (14, 16, 114, 116) entkoppelt ist, so dass das halbstarre Solarpanel (18, 20, 118, 120) in der Transportstellung freischwingend zwischen den wenigstens zwei starren Solarpanels (14, 16, 114, 116) angeordnet ist.

2. Satellitensolargeneratorflügel (10) nach Anspruch 1, **dadurch gekennzeichnet, dass** wenigstens eine zum Erreichen der Betriebsstellung lösbare Koppelungseinheit (24) vorgesehen ist, wobei die wenigstens zwei starren Solarpanels (14, 16, 114, 116) in der Transportstellung über die Koppelungseinheit (24) miteinander gekoppelt sind.

3. Satellitensolargeneratorflügel (10) nach Anspruch 1 oder 2, **dadurch gekennzeichnet, dass** die wenigstens zwei starren Solarpanels (14, 16, 114, 116) in der Transportstellung miteinander schwingungsgekoppelt sind, insbesondere über die wenigstens eine Koppelungseinheit (24).

4. Satellitensolargeneratorflügel (10) nach Anspruch 2 oder 3, **dadurch gekennzeichnet, dass** das halbstarre Solarpanel (18, 20, 118, 120) wenigstens eine Ausnehmung (32) aufweist, die im Bereich der Koppelungseinheit (24) vorgesehen ist, sodass sich zumindest ein Teil der Koppelungseinheit (24) durch die Ausnehmung (32) erstreckt, ohne das halbstarre Solarpanel (18, 20, 118, 120) an der Koppelungseinheit (24) anzubinden.

5. Satellitensolargeneratorflügel (10) nach einem der vorhergehenden Ansprüche, **dadurch gekennzeichnet, dass** zumindest die wenigstens zwei starren Solarpanels (14, 16, 114, 116) Bewegungsbegrenzer (34) aufweisen, die eine Bewegungsamplitude des halbstarren Solarpanels (18, 20, 118, 120) zu den wenigstens zwei starren Solarpanels (14, 16, 114, 116) begrenzen.

6. Satellitensolargeneratorflügel (10) nach Anspruch 5, **dadurch gekennzeichnet, dass** in der Transportstellung ein Spalt (44) zwischen den Bewegungsbegrenzern (34) und einer zugeordneten Anschlagfläche (42) am gegenüberliegenden Bauteil vorhanden ist, um ein Schwingen der Solarpanels (14-20, 114-120) zueinander zu erlauben.

7. Satellitensolargeneratorflügel (10) nach Anspruch 6, **dadurch gekennzeichnet, dass** die Bewegungsbegrenzer (34) und die zugeordneten Anschlagflächen (42) derart ausgebildet sind, dass die Bewegungen des halbstarren Solarpanels (18, 20) in Panelebene relativ zu den starren Solarpanels (14, 16) begrenzt sind.

8. Satellitensolargeneratorflügel (10) nach Anspruch 7, **dadurch gekennzeichnet, dass** die Bewegungsbegrenzer (34) und die zugeordneten Anschlagflächen (42) in jeder Relativstellung der Solarpanels in Transportstellung ineinandergreifen und das halbstarre Solarpanel (18, 20) gegen seitliches Herausbewegen zwischen den wenigstens zwei starren Solarpanels sichern.

9. Satellitensolargeneratorflügel (10) nach einem der vorhergehenden Ansprüche, **dadurch gekennzeichnet, dass** das halbstarre Solarpanel (18, 20, 118, 120) Versteifungselemente (26) aufweist.

10. Satellitensolargeneratorflügel (10) nach einem der Ansprüche 6 bis 8 sowie nach Anspruch 9, **dadurch gekennzeichnet, dass** die Versteifungselemente (26) die Anschlagflächen (42) für die gegenüberliegenden Bewegungsbegrenzer (34) haben, um die Bewegungsamplitude des halbstarren Solarpanels (18, 20, 118, 120) zu begrenzen.

11. Satellitensolargeneratorflügel (10) nach Anspruch 9 oder 10, **dadurch gekennzeichnet, dass** die Versteifungselemente (26) zumindest einen Rahmen (28) für das halbstarre Solarpanel (18, 20, 118, 120) bilden.

12. Satellitensolargeneratorflügel (10) nach einem der vorhergehenden Ansprüche, **dadurch gekennzeichnet, dass** zwei in der Transportstellung unmittelbar übereinanderliegende halbstarre Solarpanels (18, 20, 118, 120) vorgesehen sind, die in der Transportstellung zwischen zwei starren Solarpanels (14, 16, 114, 116) freischwingend angeordnet sind.

13. Satellitensolargeneratorflügel (10) nach Anspruch 12, **dadurch gekennzeichnet, dass** zumindest eines der beiden halbstarren Solarpanels (18, 20, 118, 120) Bewegungsbegrenzer (34) aufweist, um eine Amplitude einer Relativbewegung zum anderen halbstarren Solarpanel (18, 20, 118, 120) zu begrenzen.

14. Satellitensolargeneratorflügel (10) nach einem der vorhergehenden Ansprüche, **dadurch gekennzeichnet, dass** die wenigstens zwei starren Solarpanels (14, 16, 114, 116) und die zugeordneten halbstarren Solarpanels (18, 20, 118, 120) jeweils ein Solarpanelsystem bilden, wobei mehrere Solarpanelsysteme vorgesehen sind.

15. Satellit mit wenigstens einem Satellitensolargeneratorflügel (10) nach einem der vorhergehenden Ansprüche.

## Claims

1. A satellite solar generator wing (10) comprising:
at least two fixed solar panels (14, 16, 114, 116) and at least one semi-fixed solar panel (18, 20, 118, 120), which are connected to one another, so that the solar panels (14-20, 114-120) can assume an operating position and a transport position, wherein, in the transport position, the solar panels (14-20, 114-120) are retained on top of one another, **characterized in that** the semi-fixed solar panel (18, 20, 118, 120), in the transport position, is decoupled from the at least two fixed solar panels (14, 16, 114, 116), so that the semi-fixed solar panel (18, 20, 118, 120), in the transport position, is arranged in a freely oscillating manner between the at least two fixed solar panels (14, 16, 114, 116).

2. The satellite solar generator wing (10) according to claim 1, **characterized in that** at least one coupling unit (24) that is structured and arranged to be releasable to assume the operating position, wherein the at least two fixed solar panels (14, 16, 114, 116) are coupled to one another via the coupling unit (24) in the transport position.

3. The satellite solar generator wing (10) according to claim 1 or 2, **characterized in that** the at least two fixed solar panels (14, 16, 114, 116) are oscillation-coupled to one another in the transport position, in particular via the at least one coupling unit (24).

4. The satellite solar generator wing (10) according to claim 2 or 3, **characterized in that** the semi-fixed solar panel (18, 20, 118, 120) comprises at least one opening (32) located in a region of the at least one coupling unit (24), so that at least one segment of the coupling unit (24) extends through the opening (32) without binding the semi-fixed solar panel (18, 20, 118, 120) to the at least one coupling unit (24).

5. The satellite solar generator wing (10) according to any of the preceding claims, **characterized in that** the at least two fixed solar panels (14, 16, 114, 116) include movement restrictors (34) structured and arranged to limit a movement amplitude of the semi-fixed solar panel (18, 20, 118, 120) relative to the at least two fixed solar panels (14, 16, 114, 116).

6. The satellite solar generator wing (10) according to claim 5, **characterized in that**, in the transport position, a gap (44) is present between the movement restrictors (34) and a corresponding contact surface (42) on an opposing component, in order to allow oscillation of the solar panels (14-20, 114-120) relative to one another.

7. The satellite solar generator wing (10) according to claim 6, **characterized in that** the movement restrictors (34) and the corresponding contact surfaces (42) are embodied so as to limit movements of the semi-fixed solar panel (18, 20) relative to the fixed solar panels (14, 16) on the panel plane.

8. The satellite solar generator wing (10) according to claim 7, **characterized in that** the movement restrictors (34) and the corresponding contact surfaces (42), in each relative position of the solar panels in the transport position, are engageable with one another and secure the semi-fixed solar panel (18, 20) against a lateral deflection between the at least two fixed solar panels.

9. The satellite solar generator wing (10) according to any of the preceding claims, **characterized in that** the semi-fixed solar panel (18, 20, 118, 120) comprises reinforcing elements (26).

10. The satellite solar generator wing (10) according to one of claims 6 to 8 and according to claim 9, **characterized in that** the reinforcing elements (26) have the contact surfaces (42) arranged to face the opposite movement restrictors (34) in order to limit the movement amplitude of the semi-fixed solar panel (18, 20, 118, 120).

11. The satellite solar generator wing (10) according to claim 9 or 10, **characterized in that** the reinforcing elements (26) form at least one frame (28) for the semi-fixed solar panel (18, 20, 118, 120).

12. The satellite solar generation wing (10) according to any of the preceding claims, **characterized in that** two semi-fixed solar panels (18, 20, 118, 120) arranged to lie directly on top of one another in the transport position are provided that are arranged in a freely oscillating manner between two fixed solar panels (14, 16, 114, 116) in the transport position.

13. The satellite solar generator wing (10) according to claim 12, **characterized in that** at least one of the two semi-fixed solar panels (18, 20, 118, 120) comprises movement restrictors (34) structured and arranged to limit an amplitude of the movement relative to the other of the two semi-fixed solar panel (18, 20, 118, 120).

14. The satellite solar generator wing (10) according to any of the preceding claims, **characterized in that** the at least two fixed solar panels (14, 16, 114, 116) and the corresponding semi-fixed solar panels (18, 20, 118, 120) each form a solar panel system, wherein a plurality of solar panel systems are arranged.

15. A satellite comprising at least one satellite solar generator wing (10) according to any of the preceding claims.

## Revendications

1. Pale de générateur solaire de satellite (10) comprenant au moins deux panneaux solaires rigides (14, 16, 114, 116) et au moins un panneau solaire semi-rigide (18, 20, 118, 120) reliés entre eux de telle sorte que les panneaux solaires (14 à 20, 114 à 120) sont en mesure de prendre une position de service et une position de transport, les panneaux solaires (14 à 20, 114 à 120) étant maintenus les uns au-dessus des autres dans la position de transport, **caractérisée en ce que** le panneau solaire semi-rigide (18, 20, 118, 120) est, dans la position de transport, désaccouplé desdits au moins deux panneaux solaires rigides (14, 16, 114, 116) si bien que le panneau solaire semi-rigide (18, 20, 118, 120) est, dans la position de transport, disposé entre lesdits au moins deux panneaux solaires rigides (14, 16, 114, 116) de manière à pouvoir osciller librement.

2. Pale de générateur solaire de satellite (10) selon la revendication 1, **caractérisée en ce qu'**il est prévu au moins une unité d'accouplement (24) détachable pour atteindre la position de service, lesdits au moins deux panneaux solaires rigides (14, 16, 114, 116) étant, dans la position de transport, reliés l'un à l'autre par le biais de cette unité d'accouplement (24).

3. Pale de générateur solaire de satellite (10) selon la revendication 1 ou 2, **caractérisée en ce que** lesdits au moins deux panneaux solaires rigides (14, 16, 114, 116) sont, dans la position de transport, couplés de manière oscillatoire, plus particulièrement par le biais de ladite au moins une unité d'accouplement (24).

4. Pale de générateur solaire de satellite (10) selon la revendication 2 ou 3, **caractérisée en ce que** le panneau solaire semi-rigide (18, 20, 118, 120) présente au moins un évidement (32) prévu dans la zone de l'unité d'accouplement (24) si bien qu'au moins une partie de l'unité d'accouplement (24) s'étend à travers l'évidement (32) sans relier le panneau solaire semi-rigide (18, 20, 118, 120) à l'unité d'accouplement (24).

5. Pale de générateur solaire de satellite (10) selon l'une des revendications précédentes, **caractérisée en ce que** lesdits au moins deux panneaux solaires rigides (14, 16, 114 116) présentent des limiteurs de mouvement (34) qui limitent une amplitude de mouvement du panneau solaire semi-rigide (18, 20, 118, 120) par rapport auxdits au moins deux panneaux solaires rigides (14, 16, 114, 116).

6. Pale de générateur solaire de satellite (10) selon la revendication 5, **caractérisée en ce que** dans la position de transport, il existe un interstice (44) entre les limiteurs de mouvement (34) et une surface de butée (42) associée sur la pièce opposée pour permettre aux panneaux solaires (14 à 20, 114 à 120) d'osciller les uns par rapport aux autres.

7. Pale de générateur solaire de satellite (10) selon la revendication 6, **caractérisée en ce que** les limiteurs de mouvement (34) et les surfaces de butée (42) associées sont conçues de telle sorte que les mouvements du panneau semi-rigide (18, 20) sont limités dans le plan du panneau par rapport aux panneaux solaires rigides (14, 16).

8. Pale de générateur solaire de satellite (10) selon la revendication 7, **caractérisée en ce que** les limiteurs de mouvement (34) et les surfaces de butée (42) associées sont, en position de transport, en prise les uns dans les autres dans chaque position relative des panneaux solaires et empêchent le panneau solaire semi-rigide (18, 20) de sortir latéralement d'entre lesdits au moins deux panneaux solaires rigides.

9. Pale de générateur solaire de satellite (10) selon l'une des revendications précédentes, **caractérisée en ce que** le panneau semi-rigide (18, 20, 118, 120) présente des éléments de renforcement (26).

10. Pale de générateur solaire de satellite (10) selon l'une des revendications 6 à 8 ainsi que selon la revendication 9, **caractérisée en ce que** les éléments de renforcement (26) possèdent des surfaces de butée (42) pour les limiteurs de mouvement (34) opposés afin de limiter l'amplitude de mouvement du panneau solaire semi-rigide (18, 20, 118, 120).

11. Pale de générateur solaire de satellite (10) selon la revendication 9 ou 10, **caractérisée en ce que** les éléments de renforcement (26) forment au moins un cadre (28) pour le panneau solaire semi-rigide (18, 20, 118, 120).

12. Pale de générateur solaire de satellite (10) selon l'une des revendications précédentes, **caractérisée en ce qu'**il est prévu deux panneaux solaires semi-rigides (18, 20, 118, 120) directement placés l'un sur l'autre dans la position de transport et montés entre deux panneaux solaires rigides (14, 16, 114, 116) de manière à pouvoir osciller librement dans la position de transport.

13. Pale de générateur solaire de satellite (10) selon la revendication 12, **caractérisée en ce qu'**au moins un des deux panneaux solaires semi-rigides (18, 20, 118, 120) présente des limiteurs de mouvement (34) afin de limiter l'amplitude d'un mouvement relatif par rapport à l'autre panneau solaire semi-rigide (18, 20, 118, 120).

14. Pale de générateur solaire de satellite (10) selon l'une des revendications précédentes, **caractérisée en ce que** lesdits au moins deux panneaux solaires rigides (14, 16, 114, 116) et les panneaux solaires semi-rigides (18, 20, 118, 120) associés forment respectivement un système de panneaux solaires, plusieurs systèmes de panneaux solaires étant prévus.

15. Satellite comprenant au moins une pale de générateur solaire de satellite (10) selon l'une des revendications précédentes.
